# EUROPEAN PATENT SPECIFICATION

(11) **EP 3 118 100 B1**
(45) Date of publication and mention of the grant of the patent: **17.10.2018**
(21) Application number: 16177529.1
(22) Date of filing: 01.07.2016
(51) Int. Cl.: B63B 3/68, E04B 1/94, E04C 2/292, E04C 2/32

(54) **WALL STRUCTURE**
WANDSTRUKTUR
STRUCTURE DE PAROI

(30) Priority: 14.07.2015 FI 20155555
(43) Date of publication of application: 18.01.2017
(73) Proprietor: Piikkio Works Oy, 21500 Piikkiö (FI)
(72) Inventor: Pietilä, Jussi, FI-31500 Koski TL (FI); Hentunen, Kari, FI-21380 Aura (FI)
(74) Representative: Berggren Oy, Helsinki & Oulu

(56) References cited:
- EP-A1- 0 285 509
- EP-A1- 0 612 896
- EP-A1- 0 801 190
- EP-A1- 1 306 495
- EP-A2- 0 878 390
- DE-A1- 1 683 084

## Description

The invention relates to a wall structure, which is made of a fire resistant material and which comprises at least a first wall element and a second wall element, each consisting of a material of given thickness, said first wall element and said second wall element comprising a surface plate which has its first edge and its opposite second edge provided with bends for joining the wall elements to each other, in accordance with the preamble of claim 1.

### Prior art

It is an objective for example in shipbuilding industry to achieve the reducing of weight on the one hand of the actual main structure, such as vessels, offshore structures, etc. and on the other hand of the interior structures thereof, such as deck constructions, cabin assemblies, etc. The reducing of the weight of structures must nevertheless be conducted in such a way that for example appropriate strength, fire safety and sound insulation for the structures will be ensured.

For example in cabin, spatial, and corridor structures related thereto, use is made of wall elements made of flat and corrugated pieces of sheet metal or steel plates. The wall elements are most often provided with both a coating and an insulation layer as necessary in the intended use.

Publication FI 119652 B discloses a wall structure made of a fire resistant material. The wall structure comprises wall elements with bends at the edges thereof for joining the wall elements to each other. In connection with the bends is attached a separate vertical stiffener for reinforcing the structure. The structure is complicated and heavy.

Publication FI 118019 B discloses another wall structure made of a fire resistant material. The wall structure comprises wall elements with bends at the edges thereof for joining the wall elements to each other. The prior employed vertical stiffener of steel has been omitted, which has required increasing the surface plate thickness. In addition, the surface plate has been made as an accordion type element. This increases weight and space demand.

Publication EP 0 612 896 A1 discloses a wall structure where connection between the surface plates comprises bends formed at the edges of the surface plates to be connected. The disclosed connections also comprise additional connection pieces which together with the bends in the surface plates form a closed box type structure at the connection joint.

### Summary of the invention

It is an objective of the present invention to obviate the prior art drawbacks and to provide an easy-to-manufacture, easy-to-install and robust wall structure. This objective is attained with a wall structure according to claim 1 defining the invention.

A basic idea of the invention is to exploit the bends to be made in the surface plate both for securing the wall elements to each other and for achieving robustness and stability for a wall structure constructed of the wall elements.

This is carried out by having the surface plate of the first wall element or the second wall element provided at its first edge or at its second edge opposite to the first edge with a first set of bends, including a first bend which is fashioned at a right angle relative to the surface plate and from which is established a second bend which extends in parallel direction with the surface plate and from which is established a third bend set at a right angle to and against the surface plate for constructing a closed box type structure at an edge of the surface plate. Respectively, the surface plate of the first wall element or the second wall element has its first edge or its second edge opposite to the first edge provided with a second set of bends, including a first bend which is fashioned at a right angle relative to the surface plate and from which is established a second bend which extends in parallel direction with the surface plate for constructing an open recess at an edge of the surface plate. In order to construct a wall structure, the first set of bends making up a closed box type structure is adapted to be fitted to the second set of bends making up an open recess for establishing a joint between the first wall element's surface plate and the second wall element's surface plate.

With the joint established by means of sets of bends in the surface plates is achieved a high structural rigidity for the wall structure without a separate vertical steel stiffener, which has generally been in the form of a square or rectangular tube. Thereby is achieved both material savings and weight reduction as well as savings in manufacturing and installation work,

With the joint in a wall structure of the invention is also achieved a less space occupying structure. For example, when the material for surface plates has a given thickness of 0.7 mm, the open recess and the box type structure fitted therein can have a height of about 25 mm and a total length of about 55 mm in the direction of the surface plate. This has also a reducing impact on the wall thickness of a wall structure.

The first wall element and the second wall element can be preferably attached mechanically to each other at the first bend of the first wall element's surface plate and the first bend of the second wall element's surface plate, or at the second bend of the first wall element's surface plate and the second bend of the second wall element's surface plate. Thereby can be prevented sliding between the wall elements.

It is preferred that from the third bend of the first set of bends be established a fourth bend extending at a right angle and along the surface plate for ensuring a support for the third bend against the surface plate.

The fourth bend is preferably attached to the surface plate for strengthening the box type structure.

From the second bend of the second set of bends is preferably established a third bend extending over at least a part of the length of the second bend at an angle of 180° so as to place itself against the second bend for reinforcing the same.

The closed box type structure established by the first set of bends is preferably formed with a protrusion.

The open recess established by the second set of bends is formed with a preferably groove-like additional recess.

The protrusion is preferably adapted to be fitted in the groove-like additional recess for reinforcing the joint between the closed box type structure and the open recess.

In the foregoing, the orientation of bends has been defined with a concept "at a right angle". At a right angle in the present case does not represent a precisely defined 90° angle, but it can fluctuate for example +/- 5º as set forth hereinafter. What is indicated by the definition right angle is preferably 90º +/- 5º. This enhances the steadiness and robustness of adaptations.

### Brief description of the drawings

The invention will now be described in more detail by way of example with reference to the accompanying schematic drawing, in which
figure 1 (Fig. 1) shows a first embodiment of the present invention, and
figure 2 (Fig. 2) shows a second embodiment of the present invention.

### Detailed description

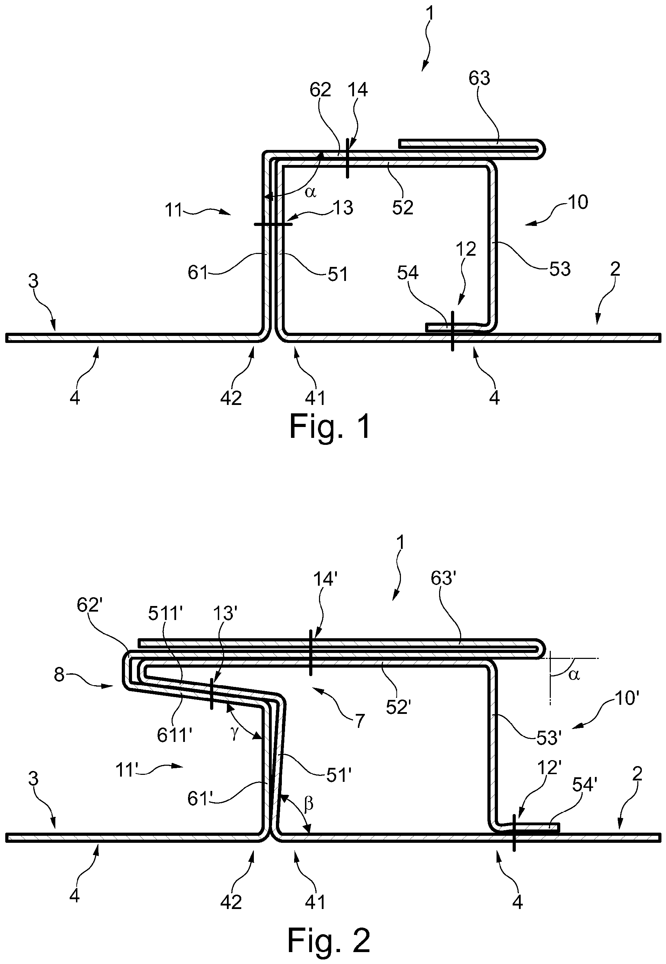

In fig. 1 is shown a first embodiment for the present invention. A wall structure 1 comprises a first wall element 2 and a second wall element 3. The wall elements are made of a fire resistant material, for example sheet metal or steel plate, which can always be appropriately coated according to required use. The given material thickness is for example 0.7 mm.

Both wall elements comprise a surface plate 4 having its first edge 41 provided with a first set of bends 10 and having its second edge 42 opposite to the first edge provided with a second set of bends 11. In fig. 1, the first edge 41 of the surface plate 4 of the first wall element 2 and the second edge 42 of the surface plate 4 of the second wall element 3 are in attachment with each other in such a way that the surface plates are coplanar for establishing a wall structure.

The first wall element 2 has the first edge 41 of its surface plate 4 formed with a first set of bends 10, including a first bend 51 which extends at a right angle relative to the surface plate 4 and away from the surface plate and from which is established a second bend 52 which is set at a right angle relative to the first bend 51 and which extends in parallel direction with the surface plate, and a third bend 53 placing itself and resting against the surface plate 4. From the third bend 53 can be further established, as depicted in fig. 1, a fourth bend 54 at a right angle and extending along the surface plate for ensuring a support for the third bend 53 against the surface plate 4. In this example, the fourth bend 54 is directed towards the interior of a box type structure, i.e. towards the first bend. In addition, the fourth bend 54 can be mechanically, e.g. with an adhesive or a screw, fastened to the surface plate 4 for strengthening the structure (mechanical attachment shown with a reference symbol 12). With the first set of bends 10 is established a closed box type structure at the first edge 41 of the surface plate 4 of the first wall element 2.

The second wall element 3 has the second edge 42 of its surface plate 4 formed with a second set of bends 11, including a first bend 61 which extends at a right angle relative to the surface plate and away from the surface plate and from which is established a second bend 62 extending at a right angle relative to the first bend 61 and in parallel direction with the surface plate. From the second bend 62 can be further established, as depicted in fig. 1, a third bend 63 extending over at least a part of the length of the second bend 62 at an angle of 180°so as to place itself in its entirety tightly against the second bend 62. In this example, the third bend 63 extends approximately halfway across the second bend 62. The purpose of the third bend 63 is to reinforce the second bend 62. With the second set of bends 11 is established an open recess at the second edge 42 of the surface plate 4 of the second wall element 3.

The closed box type structure constructed at the first edge of the first wall element's surface plate is adapted to be fitted in the open recess constructed at the second edge of the second wall element's surface plate for establishing a joint between the first wall element's surface plate and the second wall element's surface plate. The joint is established in such a way that the surface plates are coplanar. A tight adaptation relative to each other of the first set of bends and the second set of bends ensures a durable joint. Said closed box type structure, which in itself constitutes a stiffening element, also provides a necessary firmness and stability for the established joint. It has been indicated in fig. 1 how the component made up by the second bend 62 and the third bend 63 of the second set of bends 11 extends somewhat beyond the closed box type structure. This is beneficial for securing a joint.

In the foregoing, the orientation of bends has been defined with a concept "at a right angle". At a right angle in the present case does not represent a precisely defined 90° angle, but it can fluctuate for example +/- 5º as set forth hereinafter.

For example, an angle α between the second bend 62 of the second set of bends 11 and the third bend 63 of the second set extending therealong and the first bend 61 thereof can be somewhat smaller than 90°, for example 87°. This enables a tighter fit between the open recess established by the second set of bends 11 and the closed box type structure established by the first set of bends 10, which secures a joint therebetween.

If necessary, the first wall element 2 and the second wall element 3 can be fastened to each other mechanically, for example with an adhesive or a screw, at the first bend 51 of the surface plate 4 of the first wall element 2 and the first bend 61 of the surface plate of the second wall element 3 or at the second bend 52 of the surface plate 4 of the first wall element 2 and the second bend 62 of the surface plate of the second wall element 3 for the prevention of sliding between the wall elements (mechanical attachments are indicated with reference symbols 13 and 14). With regard to the second bend 62, it is of course necessary to consider the extent of the third bend 63. Other elements of a wall structure present on one or either side of the wall elements, such as for example insulation components, may also be well sufficient for keeping the wall elements stationary relative to each other.

In fig. 2 is shown a second embodiment for the present invention. A wall structure 1 comprises a first wall element 2 and a second wall element 3. The wall elements are made of a fire resistant material, for example sheet metal or steel plate, which can always be appropriately coated according to required use. The given material thickness is for example 0.7 mm.

The basic construction is consistent with the first embodiment, i.e. the joint is established by fitting a closed box type structure constructed at a first edge of the first wall element within an open recess constructed at a second edge of the second wall element. A principal difference from the first embodiment is a matching, joint attachment-securing and joint-reinforcing additional feature formed on the first set of bends and on the second set of bends. This will be explained in more detail as follows.

Both wall elements comprise a surface plate 4 having its first edge 41 provided with a first set of bends 10' and its second edge 42 opposite to the first edge with a second set of bends 11'. In fig. 2, the first edge 41 of the surface plate 4 of the first wall element 2 and the second edge 42 of the surface plate 4 of the second wall element 3 are in attachment with each other in such a way that the surface plates are coplanar for establishing a wall structure.

The first wall element 2 has the first edge 41 of its surface plate 4 formed with a first set of bends 10', including a first bend 51' which extends at a right angle relative to the surface plate 4 and away from the surface plate and from which is established a second bend 52' which extends at a right angle relative to the first bend 51' and in parallel direction with the surface plate 4 and from which is established a third bend 53' at a right angle relative to the second bend 52' and placing itself and resting against the surface plate 4. From the third bend 53' can further be established, as depicted in fig. 2, a fourth bend 54' extending at a right angle and along the surface plate 4 for ensuring a support for the third bend 53' against the surface plate 4. In this example, the fourth bend 54' is directed away from the box type structure, i.e. away from the first bend as well. In addition, the fourth bend 54' can be fastened mechanically, for example with an adhesive or a screw, to the surface plate 4 for strengthening the structure (mechanical attachment indicated with a reference symbol 12'). With the first set of bends 10' is constructed a closed box type structure at the first edge 41 of the first wall element 2.

The second wall element 3 has the second edge 42 of its surface plate 4 formed with a second set of bends 11', including a first bend 61' which extends at a right angle relative to the surface plate and away from the surface plate and from which is established a second bend 62' extending at a right angle relative to the first bend 61' and in parallel direction with the surface plate. From the second bend 62' can be further established, as depicted in fig. 1, a third bend 63' extending over at least a part of the length of the second bend 62' at an angle of 180° so as to place itself in its entirety tightly against the second bend 62'. In this example, the third bend 63' extends almost across the entire length of the second bend 62'. The purpose of the third bend 63' is to reinforce the second bend 62'. With the second set of bends 11' is established an open recess at the second edge 42 of the surface plate 4 of the second wall element 3.

This second embodiment further comprises a groove-like additional recess 7 formed on the second set of bends 11' and a protrusion 8 adaptable in said groove-like recess and formed on the first set of bends 10' for securing the attachment of a joint.

The groove-like additional recess 7 of the second set of bends 11' is established at the first bend 61' of the second set of bends 11' by establishing at the first bend 61' a first extra bend 611', which continues the recess formed by the second set of bends 11' over a part of the height of the open recess formed by the second set of bends 11' and that of the first bend 61'.

The protrusion 8 of the first set of bends 10', which is tightly adaptable into the groove-like addition recess 7 of the second set of bends 11' is established at the first bend 51' of the first set of bends 10' by establishing at the first bend 51' a first extra bend 511', which makes up a protrusion over a part of the height of the closed box type structure formed by the first set of bends and that of the first bend 51'.

The closed box type structure constructed at the first edge of the first wall element's surface plate is fitted in the open recess constructed at the second edge of the second wall element's surface plate for establishing a joint between the first wall element's surface plate and the second wall element's surface plate. The joint is established in such a way that the surface plates are coplanar. A tight adaptation relative to each other of the first set of bends and the second set of bends ensures a durable joint. Said closed box type structure, which in itself constitutes a stiffening element, also provides a necessary firmness and stability for the established joint. It has been indicated in fig. 2 how the component made up by the second bend 62' and the third bend 63' of the second set of bends 11' extends somewhat beyond the closed box type structure. This is beneficial for securing a joint.

The groove-like additional recess, presented in connection with the second embodiment and established in the open recess formed by the second set of bends, and the protrusion tightly adaptable therein and formed on the first set of bends, both improve the joint in terms of its attachment and durability and reinforce the joint.

In the foregoing, the orientation of bends has been defined with a concept "at a right angle". At a right angle in the present case does not represent a precisely defined 90° angle, but it can fluctuate for example +/- 5º as set forth hereinafter.

For example, an angle α between the second bend 62' of the second set of bends 11' and the third bend 63' of the second set extending therealong and the first bend 61' thereof can be somewhat smaller than 90°, for example 87°. This enables a tighter fit between the open recess established by the second set of bends 11' and the closed box type structure established by the first set of bends 10', which secures a joint therebetween.

If necessary, the first wall element 2 and the second wall element 3 can be fastened to each other mechanically, for example with an adhesive or a screw, by using a first extra bend 511' formed at the first bend 51' of the surface plate 4 of the first wall element 2 and a second extra bend 611' formed at the first bend 61' of the surface plate of the second wall element 3 or at the second bend 52' of the surface plate 4 of the first wall element 2 and the second bend 62' of the surface plate of the second wall element 3 for the prevention of sliding between the wall elements (mechanical attachments are indicated with reference symbols 13 and 14). With regard to the second bend 62', it is of course necessary to consider the extent of the third bend 63'. Other elements of a wall structure present on one or either side of the wall elements may also be well sufficient for keeping the wall elements stationary relative to each other.

It is further preferred that the joint according to the protrusion 8 and the additional recess 7 be designed as a tapered joint. This can be achieved in such a way that, first of all, an angle β between the surface plate 4 of the first set of bends 10' and the first bend 51' folded therefrom can somewhat smaller than 90°, for example 87°. In addition, an angle γ between the first bend 61' of the second set of bends 11' and the extra bend 611' continuing therefrom and establishing an additional recess can be larger than 90°, for examp le 93°. This enables a tight tapered fit between the additional recess 7 and the protrusion 8, making a joint therebetween more secure. A tapered structure can be attained with other bend arrangements as well.

The angle values mentioned in connection with the first and second embodiments are just exemplary. The selection of these is influenced for example by the material and material thickness of surface plates, as well as for example by requirements imposed by intended use of the wall structure.

The foregoing description and the drawing related thereto are only intended for illustrating the basic idea of the present invention. In terms of its details, such as for example angular positions of bends, mechanical attachments, adaptation between a groove-like additional recess and a protrusion, etc, the present invention may vary within the scope of the appended claims.

## Claims

1. A wall structure, which is made of a fire resistant material and which comprises at least a first wall element (2) and a second wall element (3), each consisting of a material of given thickness, said first wall element (2) and said second wall element (3) comprising a surface plate (4) which has its first edge and its second edge opposite to the first edge provided with bends for joining the wall elements to each other, wherein
- the surface plate (4) of the first wall element (2) or the second wall element (3) is provided at its first edge (41) or at its second edge (42) opposite to the first edge with a first set of bends (10;10'), including a first bend (51;51') which is fashioned at a right angle relative to the surface plate (4) and from which is established a second bend (52;52') which extends in parallel direction with the surface plate, and
- the surface plate (4) of the first wall element (2) or the second wall element (3) has its first edge (41) or its second edge (42) opposite to the first edge provided with a second set of bends (11;11'), including a first bend (61;61') which is fashioned at a right angle relative to the surface plate (4) and from which is established a second bend (62;62') which extends in parallel direction with the surface plate for constructing an open recess at an edge of the surface plate,
**characterized in that**
- from the second bend (52; 52') is established a third bend (53;53') set at a right angle to and against the surface plate for constructing a closed box type structure at an edge of the surface plate, and that
- the first set of bends (10;10') making up a closed box type structure is adapted to be fitted to the second set of bends (11;11') making up an open recess for establishing a joint between the first wall element's surface plate and the second wall element's surface plate.

2. A wall structure according to claim 1, **characterized in that** the first wall element (2) and the second wall element (3) are attached mechanically to each other at the first bend (51;51') of the surface plate (4) of the first wall element (2) and the first bend (61;61') of the surface plate of the second wall element (3), or at the second bend (52;52') of the surface plate (4) of the first wall element (2) and the second bend (62;62') of the surface plate (4) of the second wall element (3).

3. A wall structure according to claim 1, **characterized in that** from the third bend (53;53') of the first set of bends (10;10') is established a fourth bend (54;54') extending at a right angle and along the surface plate (4).

4. A wall structure according to claim 3, **characterized in that** the fourth bend (54;54') is attached mechanically to the surface plate (4).

5. A wall structure according to claim 1, **characterized in that** from the second bend (62;62') of the second set of bends (11;11') is established a third bend (63;63') placing itself against the second bend (62;62') at an angle of 180°, said third bend (63;63') extending over at least a part of the length of the second bend (62;62').

6. A wall structure according to claim 1, **characterized in that** the closed box type structure established by the first set of bends (10') is formed with a protrusion (8).

7. A wall structure according to claim 1, **characterized in that** the open recess established by the second set of bends (11') is formed with an additional recess (7).

8. A wall structure according to claims 6 and 7, **characterized in that** the protrusion (8) is adapted to be fitted in the additional recess (7).

9. A wall structure according to claim 1, **characterized in that** said bending to a right angle is 90° +/- 5°.

## Patentansprüche

1. Wandstruktur, die aus einem feuerbeständigem Material hergestellt ist und die mindestens ein erstes Wandelement (2) und ein zweites Wandelement (3) umfasst, die jeweils aus einem Material von gegebener Dicke bestehen, wobei das erste Wandelement (2) und das zweite Wandelement (3) eine Flächenplatte (4) umfassen, deren erste Kante und zweite Kante, die der ersten Kante gegenüberliegt, mit Biegungen zum Miteinanderverbinden der Wandelemente bereitgestellt sind, wobei
- die Flächenplatte (4) des ersten Wandelements (2) oder des zweiten Wandelements (3) an ihrer ersten Kante (41) oder an ihrer zweiten Kante (42), die der ersten Kante gegenüberliegt, mit einem ersten Satz von Biegungen (10; 10') bereitgestellt ist, der eine erste Biegung (51; 51') aufweist, die in einem rechten Winkel relativ zu der Flächenplatte (4) gestaltet ist und von der eine zweite Biegung (52; 52') festgelegt ist, die sich in paralleler Richtung zu der Flächenplatte erstreckt,
- die Flächenplatte (4) des ersten Wandelements (2) oder des zweiten Wandelements (3) an ihrer ersten Kante (41) oder ihrer zweiten Kante (42), die der ersten Kante gegenüberliegt, mit einem zweiten Satz von Biegungen (11; 11') bereitgestellt ist, der eine erste Biegung (61; 61') aufweist, die in einem rechten Winkel relativ zu der Flächenplatte (4) gestaltet ist und von der eine zweite Biegung (62; 62') festgelegt ist, die sich in paralleler Richtung zu der Flächenplatte erstreckt, um eine offene Vertiefung an einer Kante der Flächenplatte zu erstellen,
**dadurch gekennzeichnet, dass**
- von der zweiten Biegung (52; 52') eine dritte Biegung (53; 53') festgelegt ist, die in einem rechten Winkel zu der und gegen die Flächenplatte eingerichtet ist, um eine geschlossene kastenartige Struktur an einer Kante der Flächenplatte zu erstellen, und dass
- der erste Satz von Biegungen (10; 10'), der eine geschlossene kastenartige Struktur ausmacht, ausgelegt ist, um zu dem zweiten Satz von Biegungen (11; 11') zu passen, der eine offene Vertiefung ausmacht, um eine Verbindung zwischen der Flächenplatte des ersten Wandelements und der Flächenplatte des zweiten Wandelements festzulegen.

2. Wandstruktur nach Anspruch 1, **dadurch gekennzeichnet, dass** das erste Wandelement (2) und das zweite Wandelement (3) mechanisch aneinander an der ersten Biegung (51; 51') der Flächenplatte (4) des ersten Wandelements (2) und der ersten Biegung (61; 61') der Flächenplatte des zweiten Wandelements (3) oder an der zweiten Biegung (52; 52') der Flächenplatte (4) des ersten Wandelements (2) und der zweiten Biegung (62; 62') der Flächenplatte (4) des zweiten Wandelements (3) angebracht sind.

3. Wandstruktur nach Anspruch 1, **dadurch gekennzeichnet, dass** von der dritten Biegung (53; 53') des ersten Satzes von Biegungen (10; 10') eine vierte Biegung (54; 54') festgelegt ist, die sich in einem rechten Winkel und entlang der Flächenplatte (4) erstreckt.

4. Wandstruktur nach Anspruch 3, **dadurch gekennzeichnet, dass** die vierte Biegung (54; 54') mechanisch an der Flächenplatte (4) angebracht ist.

5. Wandstruktur nach Anspruch 1, **dadurch gekennzeichnet, dass** von der zweiten Biegung (62; 62') des zweiten Satzes von Biegungen (11; 11') eine dritte Biegung (63; 63') festgelegt ist, die sich selbst gegen die zweite Biegung (62; 62') in einem Winkel von 180°platziert, wobei sich die dritte Biegung (63; 63') über mindestens einen Teil der Länge der zweiten Biegung (62; 62') erstreckt.

6. Wandstruktur nach Anspruch 1, **dadurch gekennzeichnet, dass** die geschlossene kastenartige Struktur, die durch den ersten Satz von Biegungen (10') festgelegt ist, mit einem Vorsprung (8) gebildet ist.

7. Wandstruktur nach Anspruch 1, **dadurch gekennzeichnet, dass** die offene Vertiefung, die durch den zweiten Satz von Biegungen (11') festgelegt ist, mit einer zusätzlichen Vertiefung (7) gebildet ist.

8. Wandstruktur nach Anspruch 6 und 7, **dadurch gekennzeichnet, dass** der Vorsprung (8) ausgelegt ist, um in die zusätzliche Vertiefung (7) zu passen.

9. Wandstruktur nach Anspruch 1, **dadurch gekennzeichnet, dass** das Biegen zu einem rechten Winkel 90°+/- 5°beträgt.

## Revendications

1. Structure de paroi qui est composée d'un matériau réfractaire et qui comprend au moins un premier élément de paroi (2) et un second élément de paroi (3), chacun consistant en un matériau d'épaisseur donnée, ledit premier élément de paroi (2) et ledit second élément de paroi (3) comprenant une plaque de surface (4) dont le premier bord et le second bord sont opposés au premier bord pourvu de courbures pour joindre les éléments de paroi les uns aux autres,
- la plaque de surface (4) du premier élément de paroi (2) ou du second élément de paroi (3) étant pourvue à son premier bord (41) ou à son second bord (42) opposé au premier bord d'un premier ensemble de courbures (10 ; 10') incluant une première courbure (51 ; 51') qui est façonnée en angle droit par rapport à la plaque de surface (4) et depuis laquelle est établie une deuxième courbure (52 ; 52') qui s'étend dans un sens parallèle à la plaque de surface, et
- la plaque de surface (4) du premier élément de paroi (2) ou du second élément de paroi (3) a son premier bord (41) ou son second bord (42) opposé au premier bord pourvu d'un second ensemble de courbures (11 ; 11') incluant une première courbure (61 ; 61') qui est façonnée en angle droit par rapport à la plaque de surface (4) et depuis laquelle est établie une deuxième courbure (62 ; 62') qui s'étend dans un sens parallèle à la plaque de surface pour constituer un retrait ouvert à un bord de la plaque de surface,
**caractérisée en ce que**
- à partir de la deuxième courbure (52 ; 52') est établie une troisième courbure (53 ; 53') établie en angle droit rapport à et contre la plaque de surface pour constituer une structure de type boîte fermée))) à un bord de la plaque de surface, et que
- le premier ensemble de courbures (10 ; 10') constituant une structure de type boîte fermée est apte à être ajusté avec le deuxième ensemble de courbures (11 ; 11') constituant un retrait ouvert pour établir une jointure entre la plaque de surface du premier élément de paroi et la plaque de surface du second élément de paroi.

2. Structure de paroi selon la revendication 1, **caractérisée en ce que** le premier élément de paroi (2) et le second élément de paroi (3) sont fixés mécaniquement l'un à l'autre au niveau de la première courbure (51 ; 51') de la plaque de surface (4) du premier élément de paroi (2) et de la première courbure (61 ; 61') de la plaque de surface du second élément de paroi (3), ou au niveau de la deuxième courbure (52 ; 52') de la plaque de surface (4) du premier élément de paroi (2) et de la deuxième courbure (62 ; 60') de la plaque de surface (4) du second élément de paroi (3).

3. Structure de paroi selon la revendication 1, **caractérisée en ce que**, à partir de la troisième courbure (53 ; 53') du premier ensemble de courbures (10 ; 10'), est établie une quatrième courbure (54 ; 54') s'étendant en angle droit et le long de la plaque de surface (4).

4. Structure de paroi selon la revendication 3, **caractérisée en ce que** la quatrième courbure (54 ; 54') est fixée mécaniquement à la plaque de surface (4).

5. Structure de paroi selon la revendication 1, **caractérisée en ce que**, à partir de la deuxième courbure (62 ; 62') du second ensemble de courbures (11 ; 11'), est établie une troisième courbure (63 ; 63') se plaçant contre la deuxième courbure (62 ; 62') suivant un angle de 180°, ladite troisième courbure (63 ; 63') s'étendant sur au moins une partie de la longueur de la deuxième courbure (62 ; 62').

6. Structure de paroi selon la revendication 1, **caractérisée en ce que** la structure de type boîte fermée établie par le premier ensemble de courbures (10') est réalisée avec une saillie (8).

7. Structure de paroi selon la revendication 1, **caractérisée en ce que** le retrait ouvert établi par le deuxième ensemble de courbures (11') est réalisé avec un retrait supplémentaire (7).

8. Structure de paroi selon les revendications 6 et 7, **caractérisée en ce que** la saillie (8) est apte à être ajustée dans le retrait supplémentaire (7).

9. Structure de paroi selon la revendication 1, **caractérisée en ce que** ladite courbure en angle droit est de 90°+/-5°
